# EUROPEAN PATENT APPLICATION

(11) **EP 1 638 269 A1**
(43) Date of publication of application: **22.03.2006**
(21) Application number: 04746691.7
(22) Date of filing: 23.06.2004
(51) Int. Cl.: H04L 12/56

(54) **PACKET COMMUNICATION DEVICE AND PACKET COMMUNICATION METHOD**

(30) Priority: 24.07.2003 JP 2003278885
(71) Applicant: MATSUSHITA ELECTRIC INDUSTRIAL CO., LTD., Kadoma-shi, Osaka 571-8501 (JP)
(72) Inventor: ISHIMORI, Takayuki, Yokohama-shi, Kanagawa 233-0002 (JP); FUKUI, Akito, Kanagawa 233-0003 (JP); IIDA, Kenichiro, Yokohama-shi, Kanagawa 244-0804 (JP); TAMURA, Tomofumi, Yokohama-shi, Kanagawa 224-0054 (JP)
(74) Representative: Grünecker, Kinkeldey, Stockmair & Schwanhäusser Anwaltssozietät
(86) International application number: PCT/JP2004/009222
(87) International publication number: WO 2005/011209

(57) **Abstract**

A packet communication apparatus and a packet communication method capable of suppressing decrease in overall system throughput and preventing communication from being reset or disconnected. An ACK generation section (130) generates an ACK/NACK to indicate whether or not data transmitted on the radio channel has been demodulated correctly. A channel quality measurement section (140) measures channel quality of the radio channel from an AMD-PDU received. According to the ACK/NACK generation situation and the channel quality measured, a WSN determination section (160) determines a WSN appropriate for the channel condition and outputs the WSN to a status PDU generation section (170) . More specifically, the WSN determination section (160) determines the WSN, for example, according to the ratio of ACK/NACKs generated in the near past and SIR measurement values. When the status PDU generation section (170) generates a status PDU, it sets the WSN determined by the WSN determination section (160) in the WSN field.

## Description

### Technical Field

The present invention relates to a packet communication apparatus and a packet communication method. More specifically, the present invention relates to a packet communication apparatus and a packet communication method communicating packets through radio channels at high speed.

### Background Art

Recently, there has been an increase of examination of high speed packet communication technology called HSDPA (High Speed Downlink Packet Access). HSDPA is a technology of communicating packets on downlink radio channels from base station apparatus to mobile station apparatus at high speed, and its standardization is being promoted by 3GPP (3rd Generation Partnership Project) . According to the standardization by 3GPP, HSDPA applies such methods as adaptive modulation scheme or HARQ (Hybrid Automatic Repeat reQuest) to wireless interface to improve the speed on downlink radio channels from base station apparatus to mobile station apparatus. In addition, in HSDPA, a mobile station apparatus reports channel quality on downlink radio channels to a base station apparatus, and the base station apparatus schedules the order of data transmission to a plurality of mobile station apparatuses and transmits the data.

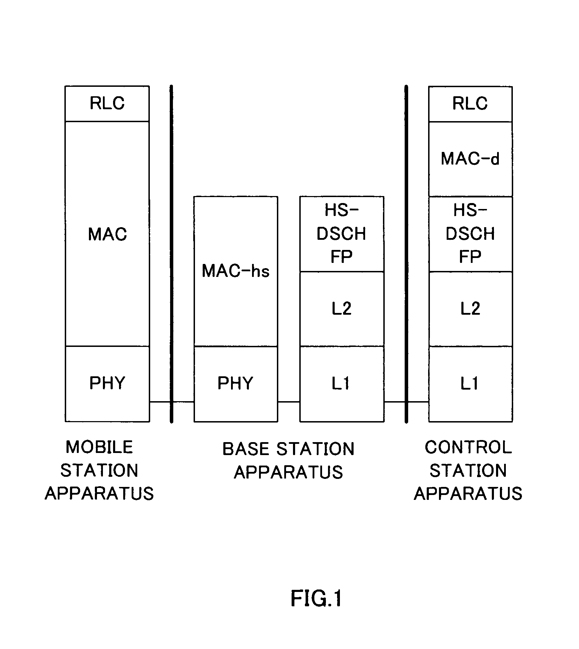

FIG.1 shows a protocol configuration on a user plane when HSDPA is applied. The figure shows protocols implemented in a mobile station apparatus, a base station apparatus and a control station apparatus controlling the base station apparatus.

Of the protocols shown in FIG.1, "RLC" (Radio Link Control) is a retransmission control protocol of the selective repeat request type described in 3GPP TS25.322 "Radio Link Control (RLC) protocol specification"V5.1.0, and is implemented by the mobile station apparatus and the control station apparatus. "MAC-hs" (Medium Access Control used for high speed) is a protocol that performs processing related to the HARQ scheme, scheduling and so forth and is implemented by the mobile station apparatus and the base station apparatus. In addition, "HS-DSCH FP" (High Speed-Downlink Shared Channel Frame Protocol) is a protocol that performs flow control between the MAC-hs of the base stations apparatus and the RLC of the mobile station apparatus and is implemented by the base station apparatus and the control station apparatus.

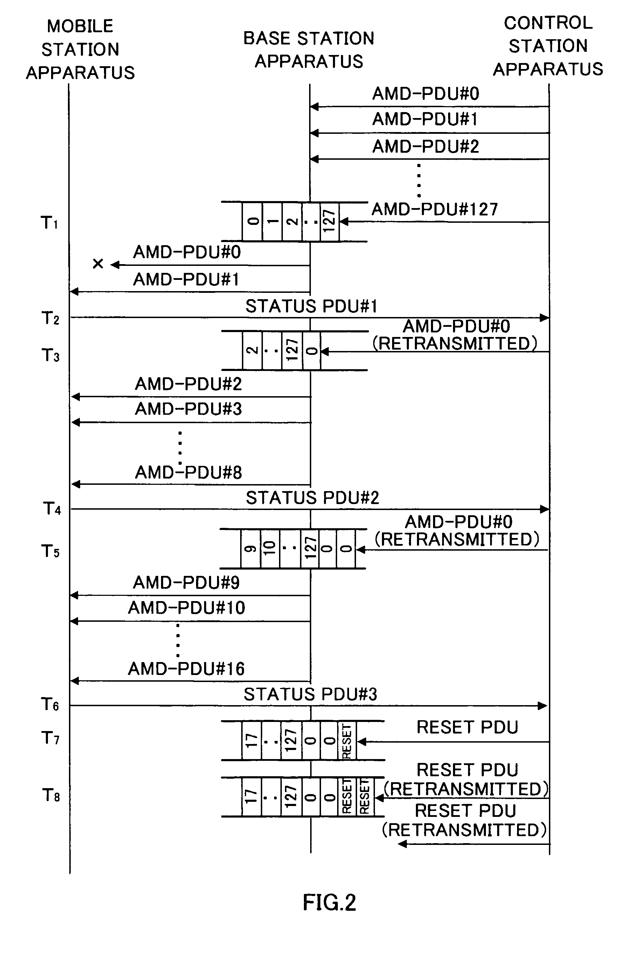

Hereinafter, packet communication between the RLCs between the control station apparatus and the mobile station apparatus will be explained with reference to the sequence diagram of FIG.2.

For downlink communication from the control station apparatus to the mobile station apparatus, the RLC of the control station apparatus transmits data packets called "AMD-PDUs" (Acknowledge Mode Data-Protocol Data Units) assigned serial sequence numbers to the RLC of the mobile station apparatus through the base station apparatus. At this time, the AMD-PDUs are stored temporally in a MAC-hs buffer in the base station apparatus. FIG.2 shows that AMD-PDU#0-AMD-PDU#127 are stored in order in the buffer of the base station apparatus at time T₁. The number of the AMD-PDUs stored then is determined according to WSN (Window Size Number) which indicates the transmission window size. In FIG.2, WSN is 128 and AMD-PDU#0-AMD-PDU#127 are stored in the buffer of the base station apparatus.

Further, the MAC-hs of the base station apparatus transmits the AMD-PDUs stored in the buffer in order from AMD-PDU#0 according to the downlink data transmission rate from the base station apparatus to the mobile station apparatus.

Meanwhile, for uplink communication from the mobile station apparatus to the control station apparatus, the RLC of the mobile station apparatus transmits a reception status report packet called a "status PDU" through the base station apparatus to the control station apparatus. The status PDU includes reception acknowledgement information indicating whether or not the AMD-PDUs are received by the RLC of the mobile station apparatus. Therefore, as shown in FIG.2, when the mobile station apparatus does not receive AMD-PDU#0 transmitted from the base station apparatus, at time T₂, status PDU#1 is transmitted through the base station apparatus to the control station apparatus indicating that AMD-PDU#0 has not been received.

The RLC of the control station apparatus receiving status PDU#1 retransmits AMD-PDU#0. The retransmitted AMD-PDU#0 is stored again in the buffer of the base station apparatus at time T₃.

However, in the above-described conventional packet communication, the problem is that a retransmitted packet is stored in the buffer of the base station apparatus and takes time to reach the mobile station apparatus, and the mobile station apparatus repeats requesting retransmission of the retransmitted packet already stored in the buffer. In other words, because the above-mentioned retransmitted AMD-PDU#0 is transmitted after AMD-PDU#127 stored in the buffer is transmitted, the mobile station apparatus requests further retransmission of AMD-PDU#0 with a status PDU, which is transmitted every predetermined timing, before receiving the transmitted AMD-PDU#0.

More specifically, in FIG.2, after status PDU#1 is transmitted at time T₂, the mobile station apparatus transmits status PDU#2 at a predetermined timing (time T₄) . However, status PDU#0 has not been received at time T₄, and so status PDU#2 indicating that AMD-PDU#0 has not been received, is transmitted through the base station apparatus to the control station apparatus.

In addition, the control station apparatus retransmits AMD-PDU#0 again in response to status PDU#2 at time T₅. However, AMD-PDU#0 is not received at time T₆ when next status PDU#3 is to be transmitted to the control station apparatus, and status PDU#3 indicating AMD-PDU#0 has not been received is transmitted through the base station apparatus to the control station apparatus.

Thus, a status PDU indicating that the same AMD-PDU#0 has not been received is transmitted several times, and, when the status PDU is transmitted a predetermined number of times (three times in FIG.2), the control station apparatus transmits, at time T₇, a reset PDU to reset the connection with the control station apparatus.

As a result, TCP (Transmission Control Protocol), an upper RLC layer, performs the transmission of AMD-PDU#0 . However, retransmission by the TCP, when a retransmission occurs, the TCP at the transmitting end performs flow control and drastically reduces the amount of transmission data per unit time. This may suppress the more than necessary and the throughput of the overall system may decrease.

In addition, as shown in FIG.2, transmitting the reset PDU transmitted at time T₇ to the mobile station apparatus requires the time all the AMD-PDUs stored in the buffer are transmitted, and, when a certain time passes after the reset PDU is transmitted, the reset PDU is retransmitted at time T₈, since no response is received from the mobile station apparatus. In addition, if the reset PDU keeps being retransmitted, the control station apparatus and the mobile station apparatus may be disconnected.

### Disclosure of Invention

It is therefore an object of the present invention to suppress decrease in overall system throughput and prevent communication from being reset or disconnected.

An essence of the present invention is to measure channel quality using a received signal, set the transmission window size (WSN) in a status PDU according to the measured channel quality and report the window size number to the signal transmission source.

In accordance with one aspect of the present invention, a packet communication apparatus adopts a configuration having: a monitoring section that monitors a channel condition of a radio channel; a determination section that determines a transmission window size of a packet transmission source according to the channel condition monitored; and a transmission section that transmits the determined transmission window size to the packet transmission source.

In accordance with another aspect of the present invention, a packet communication method is provided having the steps of: monitoring a channel condition of a radio channel; determining a transmission window size of a packet transmission source according to the channel condition monitored; and transmitting the determined transmission window size to the packet transmission source.

### Brief Description of Drawings

FIG.1 illustrates a protocol configuration of user plane in HSDPA;
FIG.2 is a sequence diagram showing an example of AMD-PDU communication operation between RLCs;
FIG.3 is a bloc diagram showing a configuration of a mobile station apparatus according to an embodiment of the present invention;
FIG.4A illustrates an example of status PDU transmission timing according to an embodiment;
FIG.4B illustrates another example of status PDU transmission timing according to an embodiment;
FIG.5 is a flow chart showing WSN determining operation according to an embodiment;
FIG.6 illustrates an example of a table for determining WSN according to an embodiment; and
FIG.7 is a sequence drawing showing AMD-PDU retransmission operation according to an embodiment.

### Best Mode for Carrying Out the Invention

With reference now to the accompanying drawings, embodiments of the present invention will be explained in detail below.

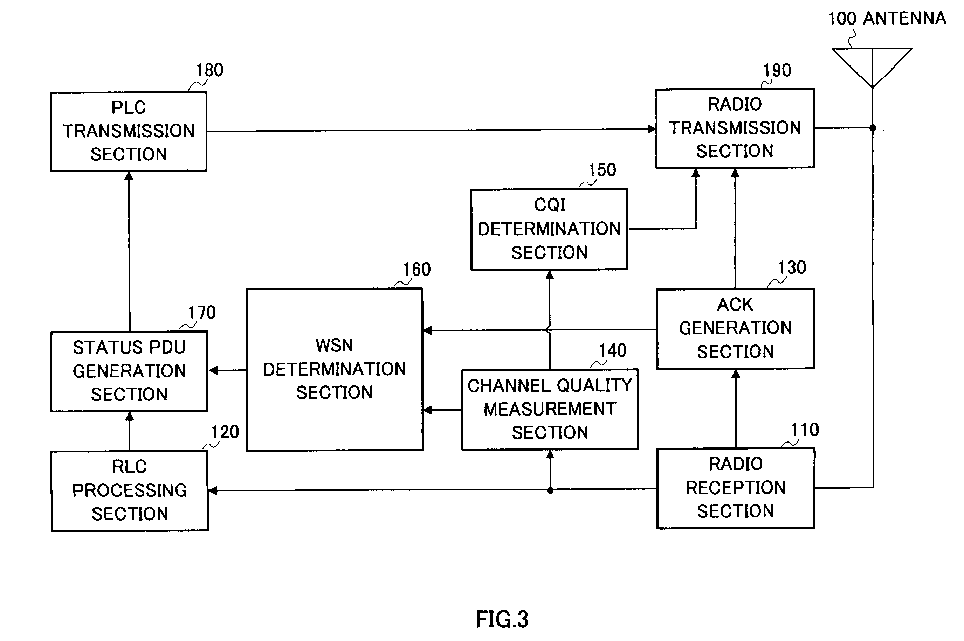

FIG.3 is a bloc diagram showing a configuration of a mobile station apparatus according to an embodiment of the present invention. The mobile station apparatus shown in FIG.3 has: antenna 100, radio reception section 110, RLC (Radio Link Control) processing section 120, ACK generation section 130, channel quality measurement section 140, CQI (Channel Quality Indicator) determination section 150, WSN (Window Size Number) determination section 160, status PDU (Protocol Data Unit) generation section 170, RLC transmission section 180 and radio transmission section 190. Note that the mobile station apparatus shown in FIG. 3 receives AMD-PDUs (Acknowledge Mode Data-PDUs) from a control station apparatus through a base station apparatus and that radio communication is performed between the mobile station apparatus and the base station apparatus.

Antenna 100 receives an AMD-PDU, which is a data packet, and transmits a status PDU, which is a reception status report packet, and the AMD-PDU.

Radio reception section 110 receives the AMD-PDU through antenna 100 and performs predetermined radio reception processing (such as down conversion and A/D conversion) .

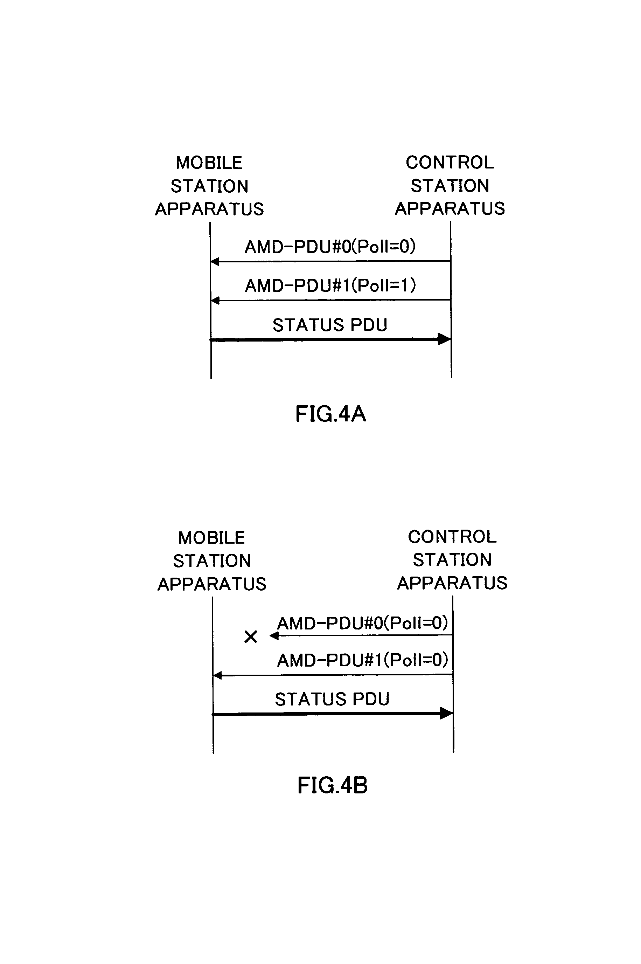

RLC processing section 120 refers to the poll field in the AMD-PDU, and, if the poll field indicates a transmission request for a status PDU, orders status PDU generation section 170 to generate a status PDU. Note that the poll field is set by the control station apparatus and the control station apparatus uses the poll field and issues a transmission request for a status PDU with an AMD-PDU, for example, every time a predetermined period passes. More specifically, as shown in FIG. 4A for example, the control station apparatus, when not requesting a transmission of a status PDU, sets 0 in the poll field. On the other hand, when requesting a transmission of a status PDU, the control station apparatus sets 1 in the poll field. This causes the mobile station apparatus to transmit a status PDU to the control station apparatus.

In addition, RLC processing section 120 detects the sequence number of the received AMD-PDU, and, as shown in FIG. 4B, when the sequence number is discontinuous (for example, when AMD-PDU#1 is received when AMD-PDU#0 has not been received) --in other words, when there is a missing AMD-PDU--RLC processing section 120 orders status PDU generation section 170 to generate a status PDU informing the control station apparatus of the missing AMD-PDU.

ACK generation section 130 generates an ACK/NACK indicating whether or not data transmitted via radio channels has been demodulated correctly. An ACK/NACK acknowledges the reception of data transmitted from the base station apparatus, which is the direct communicating party station, and is generated in accordance with error detection results, for example, when retransmission in HARQ scheme is performed. ACK generation section 130 generates an ACK when data transmitted via radio channel has been demodulated correctly and on the other hand generates a NACK when there are many errors on the radio channels and data has not been demodulated correctly. And ACK generation section 130 transmits the generated ACK/NACK to the base station apparatus through radio transmission section 190 and antenna 100.

Channel quality measurement section 140 measures the channel quality of the radio channel from the received AMD-PDU. More specifically, channel qualitymeasurement section 140 measures channel quality such as the SIR (Signal to Interference Ratio) or the reception power and so forth.

ACK generation section 130 and channel quality measurement section 140 serve as a monitoring section that monitors channel conditions of the radio channel between the base station apparatus and the mobile station apparatus.

CQI determination section 150 determines the CQI for reporting channel quality to the base station apparatus, which is the direct communicating party station. The CQI is a reference value indicating channel quality of the channel from the base station apparatus toward the mobile station apparatus, and the base station apparatus performs adaptive modulation which selects a modulation scheme suitable for the cannel condition based on the CQI reported. Note that the base station apparatus performs adaptive modulation and the data transmission rate on the channel from the base station apparatus to the mobile station apparatus varies according to the channel condition. Therefore, the speed AMD-PDUs are transmitted from the buffer of the base station apparatus, which stores the AMD-PDUs temporarily, varies.

WSN determination section 160 determines the WSN appropriate for the channel condition in accordance with ACK/NACK generation situation and the channel quality measured, and outputs the WSN to PDU generation section 170. More specifically, WSN determination section160 determines the WSN, for example, according to the ratio of ACK/NACK generated in ACK generation section 130 in the near past and SIR measurement value. WSN determination section160 selects the WSN corresponding to the ratio of ANK/NACK and SIR measurement value from a table, for example, and thus determines the WSN.

The WSN determined then may be the number of AMD-PDUs that can be transmitted from the buffer of the base station apparatus to the mobile station apparatus in the period the above-mentioned poll field provides 1 (period in which a status PDU is transmitted from the mobile station apparatus). In other words, when a retransmission of an AMD-PDU is requested with one status PDU, the retransmitted AMD-PDU will not continue being stored in the buffer of the base station apparatus but will have been retransmitted by the time the next status PDU is transmitted. Therefore, a retransmission request for the same AMD-PDU will not be repeated a number of times. Note that the number of AMD-PDUs that can be transmitted from the buffer of the base station apparatus to the mobile station apparatus in a given time varies according to channel conditions of the radio channel. When the channel condition is good, relatively many AMD-PDUs can be transmitted. On the other hand, when the channel condition is poor, only a small number of AMD-PDUs can be transmitted.

In addition, as mentioned above, an ACK is generated when received data has few errors and is demodulated correctly, and so when the ratio an ACK is generated is high, this may be an indication of good channel condition. On the other hand, a NACK is generated when received data has many errors and is not demodulated correctly, and so when the ratio a NACK is generated is high, this may be an indication of poor channel condition. In addition, the SIR and received power of the AMD-PDU represent the magnitude of interference and become an indicator of channel condition.

When ordered to generate a status PDU from RLC processing section 120, status PDU generation section 170 generates a status PDU in a predetermined format. Status PDU generation section 170 generates a status PDU including a request for retransmission of the missing AMD-PDU.

In addition, when "1" is set in the poll field of the received AMD-PDU, status PDU generation section 170 generates a status PDU including a request for retransmission of the AMD-PDU which has been requested retransmission earlier yet has not been retransmitted. That is, status PDU generation section 170 generates a status PDU including a request for retransmission of all AMD-PDUs yet to be received. In addition, when ordered by WSN determination section 160, status PDU generation section 170 sets the WSN determined by WSN determination section160 in the WSN field and generates a status PDU. When the status PDU reaches the control station apparatus, the control station apparatus refers to the WSN field and sets the transmission window. Therefore, when the WSN determined by WSN determination section160 is big, the control station apparatus makes the transmission window larger, and, when the WSN determined by WSN determination section160 is small, the control station apparatus makes the transmission window smaller.

RLC transmission section 180 applies RLC processing to the status PDU and transmission data and outputs the result to radio transmission section 190.

Radio transmission section 190 performs predetermined radio transmission processing (D/A conversion, up-conversion, and so forth) with the status PDU and the PDU of the transmission data and outputs the result through antenna 100.

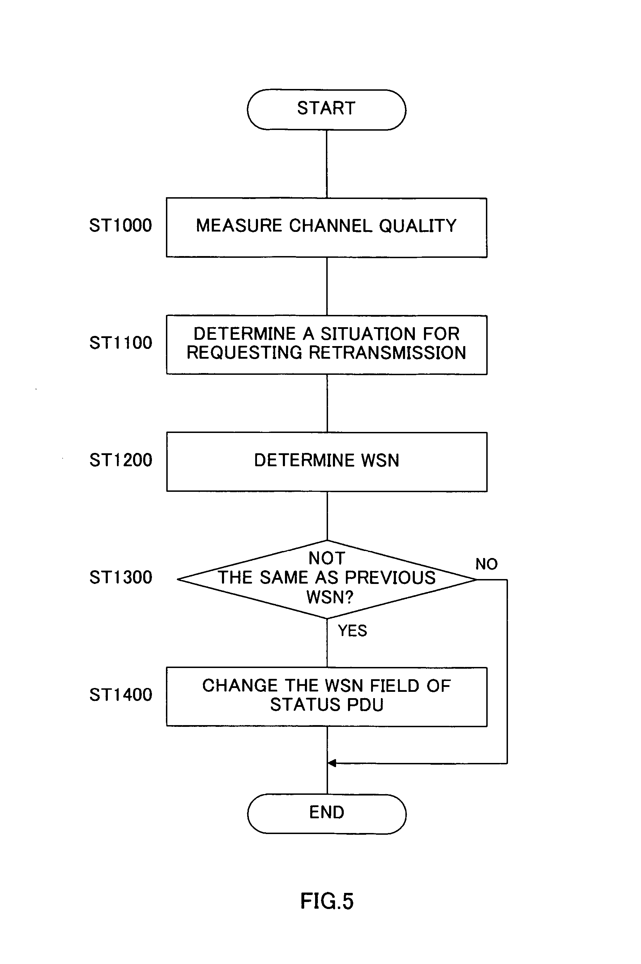

Next, the WSN determination operation of the mobile station apparatus of the above-described configuration will be explained with reference to the flow chart shown in FIG.5.

First, radio reception section 110 receives an AMD-PDU through antenna 100 and channel quality measurement section 140 measures channel quality such as the SIR (ST1000), and information about the measured channel quality is output to WSN determination section160. An ACK/NACK is generated by ACK generation section 130 in response to data transmitted from the base station apparatus and retransmission control in HARQ scheme is performed, and the generated ACK/NACK is output to WSN determination section 160.

Further, WSN determination section 160 calculates the ratio of ACK/NACK generated in the near past and the situation of retransmission request is determined (ST1100). In other words, WSN determination section160 stores, for example, a generation history of predetermined number of ACK/NACK and the ratio of ACK (or NACK) account for the generation history is calculated. At this time, that the ratio of ACK is high means that there are few errors in a radio channel of a reception data; therefore, a channel condition is regarded as in good order.

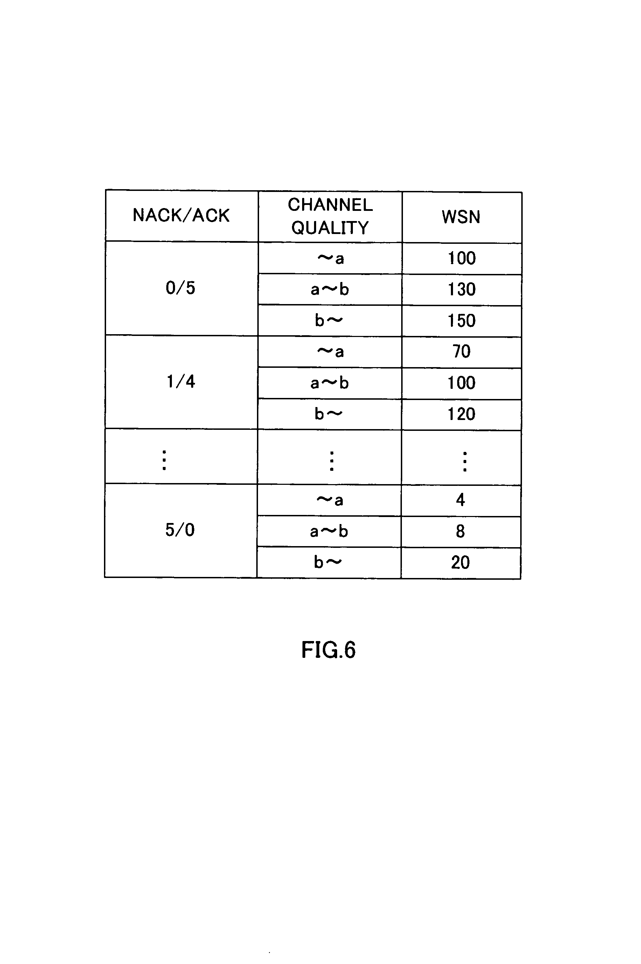

When the retransmission situation is determined, WSN determination section 160 refers to, for example, a table as shown in FIG. 6 and decides a transmission window size number (that is, WSN) according to a current channel condition (ST1200). FIG.6 is an example of a table for determining the WSN from a generation history of five ACK/NACKs and channel quality measured by channel quality measurement section 140. As shown in the figure, when the generation history of five ACK/NACK shows all ACKs and also channel quality is greater than the predetermined threshold value b, the channel condition is determined to be optimal and the WSN is determined to be the maximum of 150. On the other hand, when the generation history of ACK/NACKs shows all NACKs and also the channel quality is below the predetermined threshold value a, the channel condition is judged to be very poor and the WSN is determined 4 to be the minimum of 4.

The reason the WSN is determined this way is as follows: That is, when the channel condition is good, the transmission rate from the base station apparatus to the mobile station apparatus increases and the speed AMD-PDUs are transmitted from the buffer of the base station apparatus becomes faster, and consequently, a lot of AMD-PDU is not stored in a buffer of the base station apparatus although a window size number of the control station apparatus is big. On the other hand, when the channel condition is poor, the data transmission rate from the base station apparatus to the control station apparatus decreases, and AMD-PDUs stay longer in the buffer of the base station apparatus. Therefore, the transmission window size needs to be made smaller when the channel condition is poor.

Further, a decision is made whether or not the determined WSN is different from the one previously determined (ST 1300). When the WSN is different from the previously determined one, the newly determined WSN is reported to stats PDU generation section 170 to be set in a status PDU. Status PDU generation section 170 generates a status PDU by an indication of RLC processing section 120, the WSN determined by WSN determination section160 is set in the WSN field of the status PDU (ST1400).

Thus status PDU generated thus is subjected to RLC processing by RLC transmission section 180, subjected to predetermined radio transmission processing by radio transmission section 190, and transmitted through antenna 100. The status PDU is then transmitted to the control station apparatus though the base station apparatus.

The control station apparatus changes the transmission window size referring to the WSN field of the received status PDU and retransmits the AMD-PDU requested to be retransmitted by the status PDU. By this means, when the channel condition of the radio channel between the mobile station apparatus and the base station apparatus is good, relatively many AMD-PDUs are transmitted from the control station apparatus to the base station apparatus, while, when the channel condition of the radio channel between the mobile station apparatus and the base station apparatus is poor, relatively few AMD-PDUs are transmitted from the control station apparatus to the base station apparatus. Therefore, even if the data transmission rate from the base station apparatus to the mobile station apparatus varies by adaptive modulation, AMD-PDUs are stored in the buffer of the base station apparatus regularly in an amount in accordance with the channel condition of the radio channel between the mobile station apparatus and the base station apparatus, so that an AMD-PDU retransmitted in response to a retransmission request by a status PDU will not stay stored in the buffer of the base station apparatus for a long time.

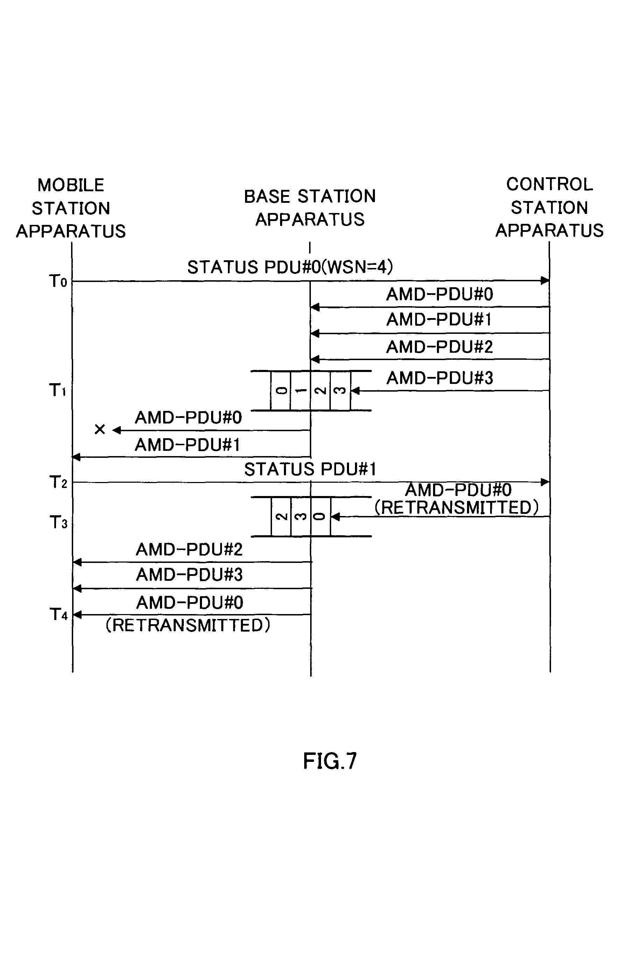

Hereinafter, the situation of AMD-PDU retransmission will be explained with reference to the sequence diagram of FIG. 7. FIG.7 describes the operation of the mobile station apparatus transmitting status PDU#0 to report the WSN.

First, at time T₀, status PDU#0 generated by status PDU generation 170 of the mobile station apparatus is transmitted through the base station apparatus to the control station apparatus. The WSN determined by WSN determination section 160 in accordance with the channel condition of the radio channel is set in the WSN field of status PDU#0, the value being 4. This WSN is, as mentioned above, determined according to the channel condition of the radio channel between the mobile station apparatus and the base station apparatus.

Upon reception of the status PDU#0, the control station apparatus makes the transmission window size 4 referring to the WSN field. In other words, the control station apparatus transmits four AMD-PDUs (AMD-PDU#0-3) simultaneously. These AMD-PDU#0-3 are received by the base station apparatus at time T1 and stored temporally in MAC-hs buffer of the base station apparatus.

The base station apparatus transmits AMD-PDU#0-3 stored in the buffer one by one to the mobile station apparatus. At this time, if AMD-PDU#0 is lost on the radio channel, AMD-PDU#1 will be the first to be received by the mobile station apparatus.

RLC processing section 120 of the mobile station apparatus detects that the sequence number is discontinuous (that is, when it is detected that AMD-PDU#1 is received without receiving AMD-PDU#0), and status PDU generation section 170 generates status PDU#1 to request retransmission of AMD-PDU#0. If the channel condition of the radio channel has changed by then and a new WSN has been determined, the new WSN is set in status PDU#1, and if the new WSN is the same as the previous WSN, the WSN field of status PDU#1 is not used.

Status PDU#1 generated by status generation section 170 is, at time T₂, transmitted from antenna 100, through the base station apparatus, to the control station apparatus.

The control station apparatus retransmits AMD-PDU#0 requested for retransmission upon reception of statusPDU#1. AMD-PDU#0 that is retransmitted (hereinafter referred to as"AMD-PDU#0 (retransmitted)") to avoid confusion) is received by the base station apparatus and stored in the buffer at time T₃. At this time, in the buffer of the base station apparatus, only two ADM-PDUs, namely ADM-PDU#2 and ADM-PDU#3, are stored at a maximum and it takes relatively a short time to transmit AMD-PDU#0 (retransmitted) from the base station apparatus to the mobile station apparatus. This is because the transmission window size of the control station size is set 4 by status PDU#0 and the number of AMD-PDUs simultaneously transmitted from the control station apparatus is suppressed.

Further, the base station apparatus transmits AMD-PDU#0 (retransmitted) at time T₄ after transmitting AMD-PDU#2 and AMD-PDU#3 stored in the buffer. If arrangement is made such that an AMD-PDU having 1 set in the poll field (in other words, one that requests transmission of a status PDU) is not transmitted until AMD-PDU#0 (retransmitted) is received by the base station apparatus, one retransmission request AMD-PDU#0 will suffice.

Thus, according to the present embodiment, the mobile station apparatus determines the WSN, which is the transmission window, according to the channel condition of the radio channel and reports the WSN to the control station apparatus, which is the AMD-PDU transmission source, so that an AMD-PDU that is retransmitted from the control station apparatus will not be stored long in the buffer of the base station apparatus relaying between the mobile station apparatus and the control station apparatus. Therefore, it is possible to prevent issuing too many retransmission requests for the same AMD-PDU, suppress decrease in overallsystemthroughput,and preventcommunicationfrom being reset or disconnected. In addition, according to the present embodiment, changes in the configuration of the mobile station apparatus make it possible to determine the optimal WSN size, and there is no need to make changes to existing radio communication systems as the base station apparatus and the control station apparatus.

As explained above, with the present invention, it is possible to suppress decrease in overall system and prevent communication from being reset or disconnected.

This application is based on Japanese Patent Application No.2003-278885 field on July 24, 2003, the entire content of which is expressly incorporated by reference herein.

### Industrial Applicability

The present invention makes it possible to suppress decrease in overall system throughput and prevent communication from being reset or disconnected, and the present invention is particularly suitable for a packet communication apparatus and a packet communication method which communicates packets at high speed through radio channels.

## Claims

1. A packet communication apparatus comprising:
a monitoring section that monitors a channel condition of a radio channel;
a determination section that determines a transmission window size of a packet transmission source according to the channel condition monitored; and
a transmission section that transmits the determined transmission window size to the packet transmission source.

2. The packet communication apparatus according to claim 1, wherein the monitoring section comprises:
a reception section that receives a packet transmitted from the packet transmission source through the radio channel; and
a measurement section measuring reception quality of the received packet.

3. The packet communication apparatus according to claim 1, wherein the monitoring section comprises an ACK generation section that generates an ACK/NACK in response to data transmitted from a radio communication party, and determines the channel condition of the radio channel referring to an ACK/NACK generation history.

4. The packet communication apparatus according to claim 1, wherein the determination section increases the transmission window size when the channel condition is good and decreases the transmission window size when the channel condition is poor.

5. The packet communication apparatus according to claim 1, wherein the determination section has a table showing transmission window sizes at the packet transmission source corresponding in association with channel conditions determines the transmission window size according to the table.

6. The packet communication apparatus according to claim 1, wherein the determination section determines the transmission window size corresponding to the number of packets that can be transmitted on the radio channel within a period in which the packet transmission source requests a transmission of a reception status report packet.

7. The packet communication apparatus according to claim 1, wherein the transmission section sets the determined transmission window size in a predetermined field of the reception status report packet and transmits the determined transmission window size.

8. The packet communication apparatus according to claim 7, wherein the transmission section transmits the reception status repot packet in accordance with a request from the packet transmission source.

9. A mobile station apparatus comprising the packet communication apparatus according to claim 1.

10. A base station apparatus comprising the packet communication apparatus according to claim 1.

11. A packet communication method comprising steps of:
monitoring a channel condition of a radio channel;
determining a transmission window size of an packet transmission source according to the channel condition monitored; and
transmitting the determined transmission window size to the packet transmission source.
